# EUROPÄISCHE PATENTSCHRIFT

(11) **EP 1 353 104 B1**
(45) Veröffentlichungstag und Bekanntmachung des Hinweises auf die Patenterteilung: **29.08.2007**
(21) Anmeldenummer: 02008425.7
(22) Anmeldetag: 12.04.2002
(51) Int. Cl.: F16K 37/00, G01B 11/14, B05C 11/10, B05B 12/08

(54) **Verfahren und Vorrichtung zum Auftragen von Fluiden auf Substraten**
Method and device for applying liquids to a substrate
Méthode et appareil pour l'application de liquides sur un substrat

(43) Veröffentlichungstag der Anmeldung: 15.10.2003
(73) Patentinhaber: NORDSON CORPORATION, Westlake, Ohio 44145-1119 (US)
(72) Erfinder: Lippelt, Helge, 21337 Lüneburg (DE)
(74) Vertreter: Eisenführ, Speiser & Partner

(56) Entgegenhaltungen:
- EP-A- 0 748 970
- EP-A- 0 979 964
- GB-A- 2 159 942
- US-A- 4 356 397
- US-A- 4 364 111
- US-A- 5 584 319

## Beschreibung

Die Erfindung betrifft ein Verfahren zum Auftragen von Fluiden auf Substrate, bei dem der Fluidfluss mittels Bewegung eines Ventilkörpers relativ zu einem Ventilkörpersitz unterbrochen und freigegeben wird,

Weiterhin betrifft die Erfindung eine Vorrichtung zum Auftragen von Fluid, insbesondere Heißschmelzklebstoff, auf ein relativ zu der Vorrichtung bewegbares Substrat mit, einem mit einer Fluidquelle verbindbaren Zuführkanal zum Zuführen von Fluid, einer mittels des Zuführkanals mit Fluid speisbaren Düsenanordnung mit einer Austrittsöffnung zum Abgeben des Fluids, und mit einer Ventilanordnung zum wahlweisen Unterbrechen des Fluidflusses, welche einen relativ zu einem Ventilsitz bewegbaren Ventilkörper aufweist, der zwischen einer den Fluidfluss unterbrechenden und einer den Fluidfluss freigebenden Stellung hin- und herbewegbar ist.

Verfahren der vorgenannten Art und entsprechende Vorrichtungen für deren Ausführung werden in einer Vielzahl von Anwendungen, bei denen das Auftragen von Fluiden erforderlich ist, genutzt. Ein großer Anwendungsbereich ist das Auftragen von Klebestoffen, Farben oder Lacken, Ölen oder Wachsen beim Herstellen oder Konservieren von verschiedenen Produkten.

Beim Auftragen von Fluiden ist es regelmäßig erforderlich, den Auftragsbeginn und das Auftragsende präzise zu steuern, um dadurch zu erreichen, dass das aufzutragende Fluid nur an bestimmten Stellen des Substrates aufgetragen wird. Weiterhin ist es in vielen Anwendungen erwünscht, ein unterbrochenes Auftragsbild des Fluids auf dem Substrat zu erreichen, beispielsweise um die Auftragsmenge zu verringern oder bestimmte Eigenschaften der Auftragsschicht zu erhalten.

Zu dem vorgenannten Zweck ist es bekannt, den Fluss des Fluids durch die Düsenanordnung durch Bewegung des Ventilkörpers zwischen einer Öffnungs- und Schließstellung freizugeben, bzw. zu unterbrechen. Die Bewegung des Ventilkörpers wird dabei durch Betätigungsmittel erreicht, wie z. B. einer Magnetspulenanordnung, einer Kolben-Zylinder-Anordnung oder einer druckbeaufschlagten Membran, welche mit dem Ventilkörper verbunden ist. Es ist bekannt, die Betätigungsvorrichtung mittels seitlich gesteuerter Signale zu regeln, um die gewünschten Zeiten für Auftragsbeginn und Auftragsende zu erreichen. Dabei ist, insbesondere wenn kurze Taktfolgen von Auftragsbeginn- und Ende angestrebt werden, das Abstimmen der Steuersignale aufwendig. So wird beispielsweise, um das gewünschte Auftragsbild zu erreichen, iterativ anhand des Auftragsbildes eine Einstellung der Steuersignale vorgenommen. Auf diese Weise wird eine Steuersignaleinstellung erreicht, welche die gewünschten Auftragszeiten, d. h. Auftragsbeginn- und -ende, Auftragslänge- und Auftragsunterbrechungslänge, erzeugt. Das Verfahren zum Einstellen dieser Werte ist jedoch aufwendig. Zudem ist es häufig erforderlich, wenn sich Parameter ändern, wie z. B. die Viskosität des Auftragsfluids, eine Nacheinstellung der Auftragsparameter vorzunehmen, um das gewünschte Auftragsbild zu erhalten. Diese Nacheinstellungen sind zeitintensiv, zudem führt das Erfordernis von Nacheinstellungen regelmäßig zu qualitativ nicht ausreichenden Auftragsergebnissen.

Aus EP 0 979 964 A2 ist eine Ventilanordnung zur Steuerung des Materialflusses in einer Beschichtungsanlage bekannt. Bei dieser Ventilanordnung ist ein Schaltstellungssensor optional vorgesehen, der ein Schaltstellungssignal für ein externes Steuersystem erzeugt. Dieses externe Steuersystem dient dazu, Prozessstörungen aufgrund von Steuerüberschneidungen zu verhindern. Mit dem solcherart vorbekannten Steuerungsverfahren können somit zwar mehrere Ventilanordnungen zuverlässig ohne Steuerüberschneidungen angesteuert werden, jedoch kann diese Ventilanordnung keine Verbesserung dahingehend bieten, dass das Auftragsmuster einer einzelnen Ventilanordnung präzise ausgebildet werden kann.

Der Erfindung liegt daher die Aufgabe zugrunde, ein Verfahren und eine Vorrichtung bereitzustellen, mit dem/der ein unterbrochenes Auftragsmuster präzise hinsichtlich der Auftragsbereiche und der nichtbeschichteten Bereiche zwischen den Auftragsbereichen erzeugt werden kann.

Diese Aufgabe wird erfindungsgemäß mit einem Verfahren nach Anspruch 1 gelöst.

Mithilfe des Sensormittels lässt sich also auf einfache maschinelle Weise die Bewegung des Ventilkörpers aufnehmen und überwachen. So kann beispielweise festgestellt werden, ob die Funktion des Ventilkörpers somit der Ventilanordnung den gewünschten Vorgaben entspricht und somit ein gewünschtes Auftragsbild erzielt werden kann.

Mithilfe des erfindungsgemäßen Verfahrens kann die Stellung gesteuert oder geregelt werden und Bewegung des Ventilkörpers in Abhängigkeit der von den Sensormitteln erfassten Stellung des Ventilköpers gesteuert oder geregelt werden.

Insbesondere kann das erfindungsgemäße Verfahren so weitergebildet werden, dass aus den Sensorsignalen die genaue Stellung, der maximale Hub (Amplitude), die Geschwindigkeit, die Beschleunigung und die Frequenz der Ventilkörperbewegung bestimmt wird. Dies kann einerseits durch Sensormittel erfolgen, die direkt die zuvor genannten Größen erfassen (z. B. Geschwindigkeits- und Beschleunigungssensoren)

Andererseits können auch durch zeitdiskrete Auflösung der Sensorsignale von Sensormitteln, welche mindestens eine Sensorstellung erfassen, die vorgenannten Größen bestimmt werden. So kann beispielsweise durch Messen der Zeitspanne, welche zwischen dem gleichsinnigen Durchlauf einer Stellung des Ventilkörpers verstreicht, die Bewegungsfrequenz des Ventilkörpers (als Kehrwert dieser Zeitspanne) bestimmt werden.

Weiterhin kann, unter der Annahme, dass der maximale Hub des Ventilkörpers erreicht wird, die mittlere Geschwindigkeit bestimmt werden, indem der Kehrwert der vorgenannten Zeitspanne mit dem zweifachen des Hubs multipliziert wird.

Liegen Sensorsignale vor, welche die Position des Ventilkörpers zu zeitlich aufeinanderfolgenden Zeiten beschreiben, so kann durch Bildung einer Positionsverlaufskurve aus diesen Sensorsignale und Ableitung dieser Positionsverlaufskurve nach der Zeit die Geschwindigkeit des Ventilkörpers zu jedem Zeitpunkt bestimmt werden.

Weiterhin kann durch Ableitung der so erhaltenen Geschwindigkeitskurve nach der Zeit die Beschleunigung des Ventilkörpers zu jedem Zeitpunkt bestimmt werden.

Die Amplitude kann in einfacher Weise bestimmt werden, indem die Umkehrpunkte der Bewegung (an denen die Geschwindigkeit regelmäßig null ist) bestimmt werden und die Auslenkungen des Ventilkörpers an diesen Umkehrpunkten voneinander substrahiert werden.

Das Verfahren kann vorteilhaft so weitergebildet werden, dass die Sensormittel in Abhängigkeit von der Stellung des Ventilkörpers zum Ventilkörpersitz ein Signal erzeugen, welches in eine Steuerungs- und Regelungseinheit geleitet wird. Diese Steuerungs- und Regelungseinheit wiederum kann ein Steuersignal erzeugen, welches die Bewegung des Ventilkörpers relativ zu dem Ventilkörpersitz steuert. Diese Steuerung der Bewegung des Ventilkörpers folgt vorzugsweise dadurch, dass das Steuersignal von der Steuerungs- und Regelungseinheit in Abhängigkeit von dem von dem Sensormittel bereit gestellten Signal einem Magnetventil zugeführt wird, welches die Druckluftzufuhr zu einem Druckluftkolben steuert, wobei der Druckluftkolben seinerseits mit dem Ventilkörper gekoppelt ist, um den Ventilkörper zu bewegen. Auf diese Weise wird ein geschlossener Regelkreis zum Ablauf des erfindungsgemäßen Verfahrens verwendet, in dem die Sensormittel einen Ist-Wert erfassen nämlich die Stellung des Ventilkörpers und in dem ein vorbestimmter Sollwert durch Regelung angestrebt wird, indem ein Steuer-/Regelungssignal an die Betätigungsvorrichtung des Ventilkörpers ausgegeben wird.

Besonders vorteilhaft ist das erfindungsgemäße Verfahren, wenn mehrere, mindestens zwei Ventilkörper vorhanden sind, deren Stellung durch den jeweiligen Ventilkörper zugeordnete Sensormittel erfasst wird und die von den Sensormitteln erzeugten Signale zur Steuerung und/oder Regelung der zeitlichen Bewegungsabfolge der Ventilkörperbewegung, insbesondere zur Synchronisation der Bewegung genutzt werden. Auf diese Weise ist es möglich, die Öffnungs- und Schließzeiten mehrer Auftragsmodule präzise zu regeln und die zeitliche Abfolge, in welcher mehrere Auftragsmodule öffnen und schließen, miteinander zu koordinieren. So können auf einem Substrat in einfacherer und sicherer Weise mehrere Streifen eines Auftragsmaterials abgelegt werden, welche z. B. die exakt gleiche Länge aufweisen. Weiterhin ist denkbar, dass die Öffnungszeit eines Auftragsmoduls der Schließzeit eines benachbarten Auftragsmoduls entspricht und die Öffnungszeit dieses benachbarten Auftragsmoduls wiederum der Schließzeit des erstgenannten Auftragsmoduls entspricht. Hierdurch wird ein präziser Auftrag von parallelen, unterbrochenen Materialstreifen auf das Substrat erreicht, bei dem zueinander benachbarte Streifen jeweils nebeneinander liegend Bereiche aufweisen, in denen in einem Streifen Auftragsmaterial aufgetragen wurde und in einem benachbarten Streifen eine Auftragsmateriallücke ist.

Die Aufgabe wird durch eine Vorrichtung gemäß Anspruch 5 gelöst. Bei dieser erfindungsgemäßen Vorrichtung zur Ausführung des erfindungsgemäßen Verfahrens sind Sensormittel vorgesehen, welche die Stellung des Ventilkörpers relativ zu dem Ventilsitz erfassen.

Durch die erfindungsgemäßen Sensormittel ist eine direkte Erfassung mindestens einer Ventilkörperstellung möglich. Durch diese direkte Erfassung ist es möglich, eine Information über die tatsächliche Stellung und/oder Information betreffend die Bewegung des Ventilkörpers zu erhalten, welche z. B. mit den Steuersignalen der Betätigungsvorrichtung des Ventilkörpers verglichen werden kann. Es ist daher nicht mehr erforderlich, anhand des tatsächlichen Auftragsbildes eine Korrektur der Steuersignale der Betätigungsvorrichtung vorzunehmen. Vielmehr kann direkt anhand der durch die Sensormittel gewonnen Informationen eine Korrektur dieser Steuersignale vorgenommen werden. Auch wird eine Information erhalten darüber, ob der Ventilkörper ordnungsgemäß in Betrieb ist oder nicht. Bei vielen Anwendungen wird der Ventilkörper mit hoher Geschwindigkeit und hoher Frequenz hin- und herbewegt, um Fluidfluss durch die Auftragsvorrichtung hochfrequent zu unterbrechen bzw. freizugeben.

In vorteilhafter Weise sind die Sensormittel an dem dem Ventilsitz gegenüberliegenden Ende des Ventilkörpers angeordnet. Durch diese Anordnung ist ein einfacher und kompakter Aufbau der Auftragsvorrichtung möglich. Weiterhin sind die Sensormittel nicht in unmittelbarer Nähe des Auftragsbereichs angeordnet, wodurch die Gefahr einer Verschmutzung der Sensormittel verringert wird. Dabei soll unter Ende des Ventilkörpers ein Bereich verstanden werden, der sich in axialer Richtung von der stirnseitigen Endfläche des Ventilkörpers aus erstreckt und somit auch von dem Ende des Ventilkörpers beabstandet sein kann.

Die Sensormittel sind vorzugsweise optische Sensormittel, welche einerseits mit Licht im sichtbaren Bereich arbeiten, andererseits können auch außerhalb dieses Bereichs liegende Wellenlängen genutzt werden. Die Funktionsweise der optischen Sensormittel kann darauf beruhen, einen Sensorstrahl auf einen Abschnitt, welcher mit dem Ventilkörper verbunden ist oder Bestandteil des Ventilkörpers ist, zu richten und die von diesem Abschnitt reflektierte Strahlung zu erfassen. Dabei kann, wenn innerhalb des Abschnitts, der bei Bewegung des Ventilkörpers den durchstrahlten Bereich durchläuft, Materialien oder Oberflächen mit verschiedenen reflektierenden Eigenschaft vorhanden sind, aufgrund der Menge der reflektierten Strahlung auf die Stellung des Ventilkörpers geschlossen werden. Vorzugsweise wird ein infraroter oder ultravioletter Bereich eingesetzt.

Weiterhin kann das Funktionsprinzip des Sensormittels darauf beruhen, einen auf einen mit dem Ventilkörper verbundenen oder in diesem enthaltenen Abschnitt zu bestrahlen und innerhalb des Abschnitts, welcher die Strahlung bei Bewegung des Ventilkörpers durchläuft, Bereiche vorzusehen, welche die Strahlung passieren lassen und Bereiche vorzusehen, die die Strahlung nicht passieren lassen. In diesem Fall wird in Verlängerung der Linie von Strahlungsquelle zu dem bestrahlten Abschnitt ein die Strahlung empfangender Sensor befestigt, welcher die von dem bestrahlten Abschnitt durchgelassene Strahlung bzw. blockierte Strahlung erfasst und somit ein Signal erzeugen kann, welches mit der tatsächlichen Stellung des Ventilkörpers zusammenhängt.

Bei einer weiteren vorteilhaften Ausführungsform umfassen die Sensormittel eine Strahlungsquelle und einen Strahlungsempfänger, wobei die Strahlungsquelle eine Strahlung auf einen Abschnitt des Ventilkörpers richtet und der Strahlungsempfänger die von diesem Ventilkörperabschnitt reflektierte Strahlung empfängt. Auf dem Ventilkörperabschnitt sind mehrere, zumindest zwei Bereiche ausgebildet, die in der Richtung der Bewegung des Ventilkörpers voneinander beabstandet sind und verschiedene reflektierende Eigenschaften aufweisen. Die von den unterschiedlich reflektierenden Bereichen zurückgeworfene Strahlung steht im Zusammenhang mit der Stellung des Ventilkörpers, so dass der Strahlungsempfänger ein Signal erzeugen kann, welches mit der Stellung des Ventilkörpers zusammenhängt.

Besonders bevorzugt ist es, wenn die Sensormittel einen Lichtwellenleiter umfassen, der Licht von einem Sender zu dem Ventilkörper und vom Ventilkörper reflektiertes Licht zu einem Empfänger leitet.

Auf diese Weise ist es möglich die Sensormittel so aufzuteilen, dass die Sensormittelelemente, welche eine Wandlung der empfangenen Lichtsignale in elktrische Signale vornehmen, nicht in unmittelbarer Nähe des Ventilkörpers angeordnet sind. Auf diese Weise sind diese Sensormittelelemente nicht den mechanischen Erschütterungen, Verschmutzungen und thermischen Einwirkungen ausgesetzt, die im Bereich des Ventilkörpers auftreten können. Insbesondere kann eine thermische Entkopplung der das Licht in elektrische Größen wie Widerstand, Spannung oder Strom wandelnden Sensorelemente erreicht werden, wodurch deren Lebensdauer und Genauigkeit erhöht wird.

Die Strahlung kann insbesondere eine Wellenlänge im Infrarotlichtbereich haben. Hierdurch sind die Sensormittel unempfindlicher gegen Verschmutzungen und gegen Umgebungseinflüsse , wie z.B. durch Licht im sichtbaren Bereich aus der Umgebung, als wenn Sensormittel verwendet werden, die mit einer Wellenlänge aus dem sichtbaren Spektrum arbeiten.

Die erfindungsgemäße Vorrichtung umfasst eine Steuerungs- und Regeleinheit, die ein von den Sensormitteln in Abhängigkeit der Stellung des Ventilkörpers erzeugtes Signal empfangen kann und ein Steuerungs- und Regelsignal erzeugen kann, welches die Bewegung des Ventilkörpers steuert. Die Steuerungs- und Regeleinheit kann dabei so mit den Sensormitteln zusammenwirken, dass vorbestimmte Sollwerte, z. B. für Öffnungs- und Schließzeiten des Ventils, in einem geschlossenen Regelkreis geregelt werden, indem das von den Sensormitteln erzeugte Signal in der Steuerungs- und Regeleinheit als Ist-Signal verarbeitet wird und mit dem vorbestimmten Sollwert verglichen wird. Hieraufhin kann, z. B. in Abhängigkeit der Differenz des Unterschieds zwischen Soll- und Istwert ein Steuerungs- und Regelsignal an die Betätigungsvorrichtung des Ventilkörpers ausgegeben werden, welches so gewählt wird, dass der Sollwert sich dem Ist-Wert angleicht. Innerhalb des solcher Art aufgebauten geschlossenen Regelkreises können übliche Regelvorgänge eines PID-Reglers ablaufen.

Eine weitere vorteilhafte Ausführungsform der Erfindung umfasst mehrere, zumindest zwei, Ventilkörper, welche jeweils mit Sensormitteln zusammenwirken. Solche Mehrfach-Auftragsköpfe sind im Stand der Technik bekannt, bei diesen Mehrfach-Auftragsköpfen kann die vorliegende Erfindung vorteilhaft eingesetzt werden, wenn alle Auftragsmodule mit Sensormitteln versehen sind, so dass die Stellung eines jeden Ventilkörpers in einem Auftragsmodul durch die jeweiligen Sensormittel erfasst werden kann.

Dabei können die Sensormittel entweder mit einzelnen, ihnen zugeordneten Steuerungs- und Regeleinheiten zusammenwirken, so dass eine individuelle Steuerung und Regelung der einzelnen Auftragsmodule möglich ist. Die einzelnen Steuerungs- und Regeleinheiten können ihrerseits mit einer übergeordneten Hauptregeleinheit verbunden sein, welche den zeitlichen Ablauf und die Taktfolge der Auftragsvorgänge der einzelnen Auftragmodule koordiniert. Weiterhin kann vorgesehen sein, dass die Sensormittel der einzelnen Auftragsmodule mit einer gemeinsamen Regeleinheit, vorzugsweise einer Mehrkanalregeleinheit verbunden sind, welche die Regelung, Steuerung der Auftragsmodule sowie den zeitlichen Ablauf der einzelnen Auftragsvorgänge der Auftragsmodule abstimmt.

Bevorzugte Ausführungsformen der erfindungsgemäßen Vorrichtung und des Verfahrens werden anhand der beiliegenden Zeichnungen erläutert. Darin zeigen:
- Fig. 1: eine Vorrichtung nach Stand der Technik zum Auftragen von Flüssigkeit (Auftragskopf) in einer Teilschnittdarstellung;
- Fig. 2: eine teilgeschnittene Ansicht einer ersten Ausführungsform der erfindungsgemäßen Vorrichtung;
- Fig. 3: eine teilgeschnittene Ansicht einer zweiten Ausführungsform der erfindungsgemäßen Vorrichtung;
- Fig. 4: ein schematischer Ablauf einer bevorzugten Ausführungsform des erfindungsgemäßen Verfahrens

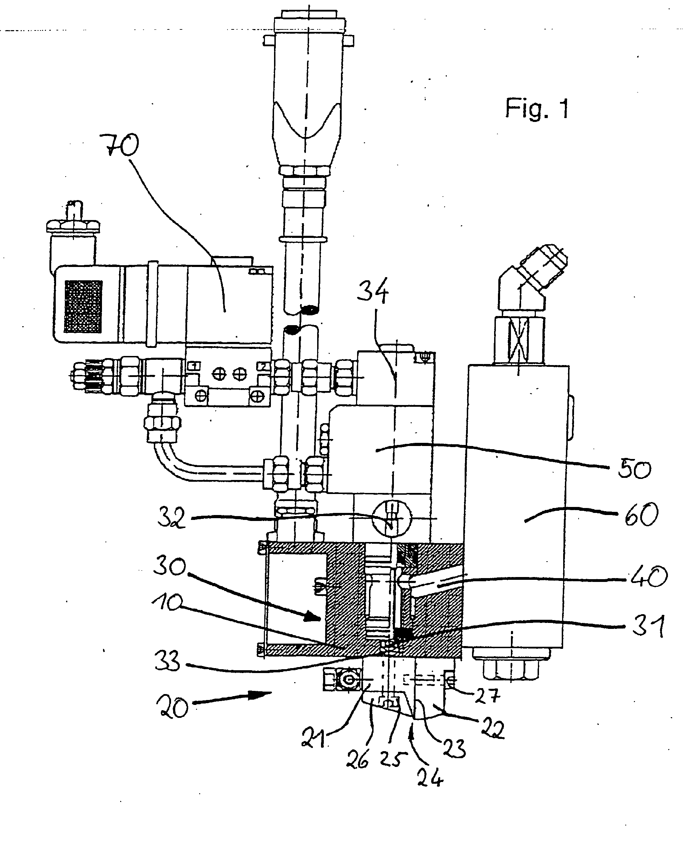

Die in Fig. 1 dargestellte Vorrichtung (nachfolgend auch als Auftragskopf bezeichnet) weist Merkmale der bevorzugten Ausführungsformen der erfindungsgemäßen Vorrichtung auf. Sie ist angepasst an eine Auftragung flüssiger oder viskoser Fluide auf Substrate und umfaßt im wesentlichen einen metallischen Grundkörper 10, eine mit dem Grundkörper 10 verschraubte Düsenanordnung 20, eine Ventilanordnung 30 sowie ein Steuerteil 50 zum Ansteuern der Ventilanordnung 30. In dem Grundkörper 10 ist ein mit einer Fluidquelle verbindbarer Fluid-Zuführkanal 40 zum Zuführen von Fluid zu der Düsenanordnung 20 ausgebildet, dem ein Filter 60 vorgeschaltet ist.

Die in den Zuführkanal 40 geschaltete Ventilanordnung 30 weist einen zusammen mit einer Ventilkörperdichtfläche 31 aus einer Öffnungsstellung in eine Schließstellung bewegbaren Ventilkörper 32 auf, der mit einem an dem Grundkörper 10 ausgebildeten Ventilsitz 33 derart zusammenwirkt, dass der Fluidstrom in die Düsenanordnung 30 in der Schließstellung unterbrochen und in der Öffnungsstellung freigegeben ist. Hierzu wird die mit einem in einem Zylinder innerhalb des Steuerteils 50 bewegbaren Kolben gekoppelter Ventilkörper 32 pneumatisch hin- oder herbewegt. Der Kolben wird durch eine Steuereinrichtung 70 in herkömmlicher Weise elektro-pneumatisch mittels eines Magnetenventils angesteuert. Die Ventilkörperdichtfläche 31 kommt durch eine Bewegung entgegen der Flußrichtung des Fluids mit dem Ventilsitz 33 in Berührung, um den Fluidfluß zu unterbrechen. Er ist innerhalb eines in dem Grundkörper 10 ausgebildeten Ventilraums angeordnet, der Teil des Zuführkanals 10 ist und mit einem in der Düsenanordnung 20 ausgebildeten Fluid-Austrittskanal kommuniziert.

Die Düsenanordnung 20 ist als Breitschlitzdüse ausgeführt und mehrteilig ausgebildet, es können aber beliebige andere Düsen eingesetzt werden. Sie umfasst ein Mundstück 22, eine Mundstückaufnahme und ein Düsenteil 26. Die Düsenanordnung 20 ist mittels Schrauben 25, die gleichzeitig das Düsenteil 26 mit der Mundstückaufnahme 21 verbinden, an den Grundkörper 10 montiert, während das Mundstück 22 mittels Schrauben 27 lösbar mit der Mundstückaufnahme 21 verbunden ist, wobei zwischen beiden ein herkömmliches Distanzblech (shim plate) plaziert ist. Durch Dichtelemente sind das Düsenteil 26 und die Mundstückaufnahme 21 relativ zueinander abgedichtet.

Der mit dem Zuführkanal 40 kommunizierende; in der Düsenanordnung 20 ausgebildete Fluid-Austrittskanal umfaßt mehrere Abschnitte, namentlich eine mit Mundstückaufnahme 21, eine im wesentlichen in einem Mundstück 22 als Nut ausgebildeten Verteilerkanal sowie einen zwischen der Mundstückaufnahme 21 und dem Mundstück 22 ausgebildeten Breitschlitz 23, der am untersten Abschnitt der Düsenanordnung 20 in eine schlitzförmige Austrittsöffnung 24 mündet, durch welche Fluid ausgestoßen und auf das Substrat aufgetragen werden kann. Der Verteilerkanal sorgt für eine Verteilung des Fluids, so dass es gleichmäßig durch den Breitschlitz 23 in Richtung auf die schlitzförmige Austrittsöffnung 24 strömt.

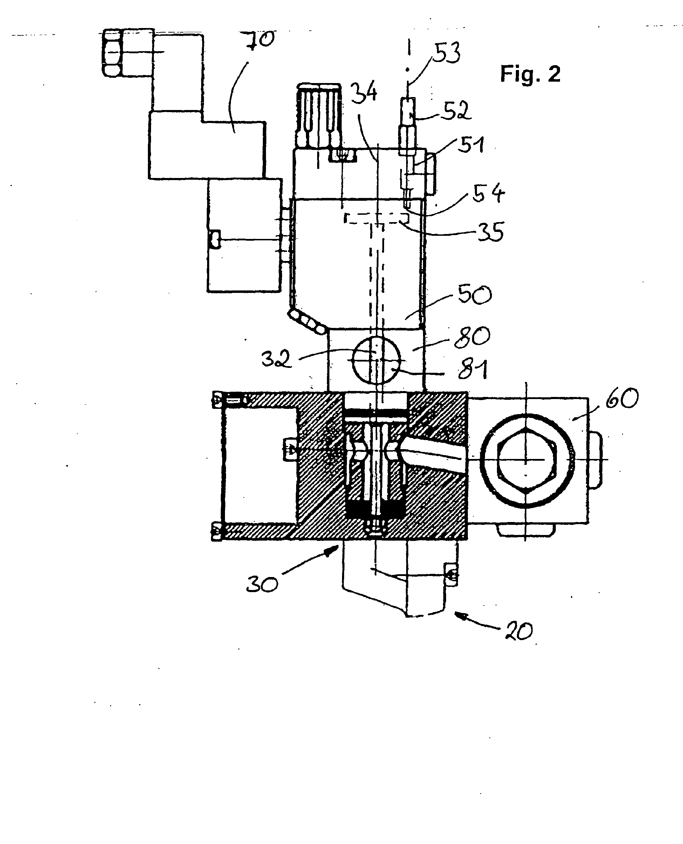

Bezug nehmend zu Figur 2, in der gleiche Bezugszeichen für die entsprechenden Bauteile gemäß Figur 1 verwendet sind, weist eine erste Ausführungsform der erfindungsgemäßen Vorrichtung an einer Seite des Steuerteils 50 eine Bohrung in paralleler Richtung zur Längsachse des Ventilkörper 32 auf, durch welche sich ein erster Lichtwellenleiter 52 erstreckt Der Lichtwellenleiter 52 weist mehrere Glasfaserbündel auf, die in zwei Glasfaserbündelabschnitte aufgeteilt sind. Eines der beiden Glasfaserbündel leitet Licht von einem Lichtwellensender (nicht abgebildet) in Richtung des Auftragskopf der Figur 2, das andere Glasfaserbündel leitet Lichtwellen vom Auftragskopf zu einem Lichtwellenempfänger (nicht abgebildet).

Die Längsachse 53 der Bohrung 51 bzw. des in die Bohrung eingesteckten Abschnitts des Lichtwellenleiters 52 ist parallel zur Längsachse 34 des Ventilkörpers ausgerichtet. Die Bohrung 51 bzw. der in die Bohrung eingesteckte Abschnitt des Lichtwellenleiters 52 ist seitlich beabstandet von der Längsachse 34 in der Weise, dass sie auf einen Randbereich eines Kolbens 35 gerichtet ist. Der Kolben 35 ist mit dem Ventilkörper 32 verbunden.

Licht, welches von dem Lichtwellenleiter 52 zum Auftragskopf der Figur 2 geleitet wird, tritt an einem unteren Ende 54 des Lichtwellenleiters 52 aus und trifft auf eine dem unteren Ende 54 zugewandte Fläche des Kolbens 35. Das Licht wird vom Kolben 35 reflektiert in Richtung des unteren Endes 54 des Lichtwellenleiters 52, da die vom Lichtwellenleiter bestrahlte Kolbenfläche etwa senkrecht zur Längsachse des in die Bohrung 51 eingesteckten Abschnitts des Lichtwellenleiters 52 liegt. Das reflektierte Licht kann somit an dem Ende 54 in den Lichtwellenleiter 52 eintreten und zu einem Lichtwellenempfänger geleitetwerden.

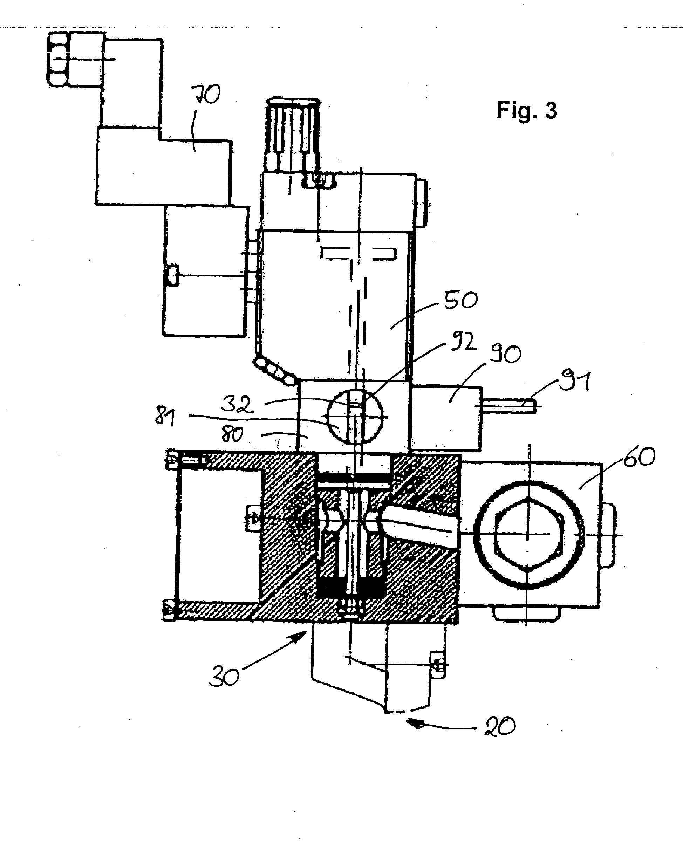

Bezug nehmend zu Figur 3, in der gleiche Bezugszeichen für die entsprechenden Bauteile gemäß Figur 1 verwendet sind, weist eine zweite Ausführungsform der erfindungsgemäßen Vorrichtung ein benachbart zum Steuerteil 50 angeordnetes Zwischenstück 80 mit einer Öffnung 81 auf, durch welche der Ventilkörper 32 beobachtet werden kann. Auf diese Weise ist es einem Bediener möglich, zu überprüfen, ob der Ventilkörper 32 in Bewegung ist oder stillsteht. An den bewegbaren, stangenförmigen oder nadelförmigen Ventilkörper 32, der auch als Ventilnadel bezeichnet werden kann, ist eine Vertiefung in Form einer Ringnut 92 ausgebildet. Die Ringnut 92 kann gegebenenfalls farblich markiert sein. Durch die Öffnung 81 kann mit dem Auge erkannt werden, ob der Ventilkörper 32 in Bewegung ist oder nicht.

Am Zwischenstück 80 ist ein optischer Sensorkopf 90 befestigt. Um Bauraum für den optischen Sensorkopf 90 zu schaffen ist die Filtervorrichtung 60 der erfindungsgemäßen Vorrichtung um 90° um eine horizontal in der Bildebene der Figuren 1 und 2 liegende Achse geschwenkt. Der optische Sensorkopf 90 wirkt mit einer zweiten Öffnung (nicht dargestellt) im Zwischenstück 80 zusammen und kann durch diese Öffnung Licht auf dem Ventilkörper 32 aufstrahlen und vom Ventilkörper 32 reflektiertes Licht empfangen.

In den optischen Sensorkopf 90 ist ein Lichtwellenleiter 91 eingesteckt, welcher Lichtwellen von einem Sender zu dem optischen Sensor leiten kann und von dem optischen Sensorkopf 90 zu einem Empfänger leiten kann. Der Lichtwellenleiter 91 ist als Glasfaserkabel ausgebildet, das aus einem Bündel mehrerer Glasfasern besteht. Die Glasfasern sind zu zwei Glasfaserbündeln zusammengefasst. Eines der Glasfaserbündel dient dazu, Licht von einem Sender zu dem optischen Sensorkopf 90 zu leiten, um das Licht auf den Ventilkörper 32 auszustrahlen. Das andere Glasfaserbündel dient dazu, dass vom Ventilkörper 32 reflektierte Licht, welches vom optischen Sensor 90 empfangen wird, an einen Empfänger weiterzuleiten. Der durch den Sensorkopf 90 gebildete Sensor wirkt vorzugsweise mit der als Ringnut 92 ausgebildeten Vertiefung zusammen. Mithilfe der Ringnut 92 wird die Empfindlichkeit des Sensors verbessert.

Die Ausführungsformen der Figur 2 und 3 unterscheiden sich hinsichtlich einer unterschiedlichen Anordnung der Lichtwellenleiter an dem Auftragskopf.

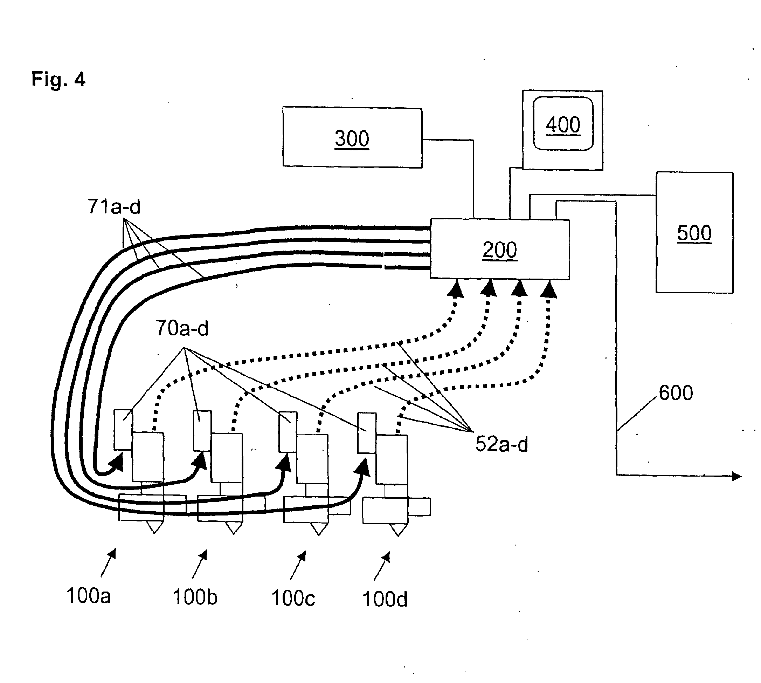

Bezug nehmend zu Figur 4 können mit dem erfindungsgemäßen Verfahren bzw der erfindungsgemäßen Vorrichtung ein intermittierender Auftrag von vier Auftragsmodulen 100 a-d und die gegenseitige Abstimmung des Auftrags dieser Auftragsmodule geregelt werden. Die Auftragsmodule weisen Lichtwellenleiter 52 a-d auf, die an einem Ende in eine entsprechende Bohrung im Auftragsmodu gesteckt sind oder mit einem entsprechenden Einstecksensor am Auftragsmodul verbunden sind, so dass Licht, welches aus dem Lichtwellenleiter an diesem Ende austritt, auf den Ventilkörper oder ein mit dem Ventilkörper verbundenes und mit diesem bewegtes Teil fällt. Das von diesem Teil oder dem Ventilkörper reflektierte Licht wiederum fällt auf das Ende des Lichtwellenleiters. Das andere Ende der Lichtwellenleiter 52 a-d ist mit einer Regeleinheit 200 verbunden. In dieser Regeleinheit 200 sind optische Sensormittel für jeden der vier Lichtwellenleiter vorgesehen, welche das von dem Ventilkörper reflektierte Licht und von dem Lichtwellenleiter geleitete Licht in elektrische Signale wandeln.

Die Steuerungs- und Regelungseinheit 200 ist mit einer Streckensteuerungseinheit 300 verbunden. Die Streckensteuerungseinheit ist eine vom Bediener der Vorrichtung programmierbare Steuerungseinheit, welche den Sollwert für die Öffnungs- und Schließzeiten der Ventile der Module 100a-d vorgibt und es ermöglicht, die Öffnungs- und Schließzeiten zeitabhängig zu programmieren.

Die Regeleinheit 200 ist einzeln über Leitungen 71 a-d mit den Steuereinrichtungen 70 a-d der Auftragsköpfe 100 a-d verbunden. Über die Leitungen 71 a-d werden die elektrischen Steuersignale geleitet, welche eine pneumatische Bewegung der Ventilkörper bewirken.

Diese Steuersignale können von der Regelungseinheit 200 anhand der über die Lichtwellenleiter 52 a-d übermittelten Signale, welche den Ist-Wert der Stellung des Ventilkörpers darstellen, verändert werden, um die von der Streckensteuerungseinrichtung 300 vorgegebenen Sollwerte zu erreichen.

Die Regelungseinheit 200 ist weiterhin mit einem Anzeigegerät 400 verbunden, welches einem Bediener der Vorrichtung Informationen über Sollwerte, Ist-Werte und weitere verfahrensrelevante Parameter anzeigt. Weiterhin ist die Regelungseinheit 200 mit einer Analyseeinheit 500 verbunden, welche eine Analyse der Abweichungen der Ist-Werte von den Sollwerten vornimmt um über Parameteränderungen eine Prozessoptimierung zu erreichen.

Über ein als CAN-BUS ausgeführtes Feldbus-Interface 600 kann die Regelungseinheit 200 mit weiteren Vier-Kanal-Regeleinheiten verbunden werden, welche als Subregeleinheiten arbeiten. Die Subregeleinheiten (nicht dargestellt) sind untereinander wiederum über einen CAN-BUS verbunden. Die Subregeleinheiten enthalten die verfahrensrelevanten Parameter und Sollwerte über den CAN-BUS von der als Master-Einheit genutzten Regeleinheit 200 und regeln ihrerseits über einen vierfachen Lichtwelleneingang und einen vierfachen Steuersignalausgang vier Auftragsköpfe. Durch diesen Datenaustausch ist ein einfacher modularer Aufbau von Auftragsvorrichtungen mit mehr als vier Auftragsköpfen und eine separate Regelung jedes einzelnen Auftragskopfes möglich.

## Patentansprüche

1. Verfahren zum Auftragen von Fluiden auf Substrate, bei dem der Fluidfluss mittels Bewegung eines Ventilkörpers relativ zu einem Ventilkörpersitz unterbrochen und freigegeben wird, wobei
mindestens eine Stellung des Ventilkörpers relativ zu dem Ventilkörpersitz durch Sensormittel, insbesondere optische Sensormittel, erfasst wird,
**dadurch gekennzeichnet, dass**
- die Sensormittel in Abhängigkeit von der Stellung des Ventilkörpers zum Ventilkörpersitz ein Sensorsignal erzeugen
- das Signal in eine Steuerungs- und Regelungseinheit geleitet wird und
- die Steuerungs- und Regelungseinheit ein Steuersignal erzeugt, welches die Bewegung des Ventilkörpers relativ zu dem Ventilkörpersitz steuert.

2. Verfahren nach Anspruch 1,
**dadurch gekennzeichnet, dass** aus den Sensorsignalen die Geschwindigkeit, Beschleunigung und/oder Taktfrequenz der Ventilkörperbewegung bestimmt wird.

3. Verfahren nach Anspruch 1 oder 2,
**dadurch gekennzeichnet, dass** der Steuerungs- und Regelungseinheit eine Sollwertkurve oder eine zeitaufgelöste Sollwertkurve aus einer programmierbaren Einheit bereitgestellt wird und die Steuerungs- und Regelungseinheit anhand dieses Sollwertes und einem aus dem Sensorsignal ermittelten Istwert das Steuersignal erzeugt.

4. Verfahren nach einem der vorhergehenden Ansprüche,
**dadurch gekennzeichnet, dass** das Sensorsignal der Sensormittel von mindestens zwei Ventilkörpern zur Steuerung der zeitlichen Bewegungsabfolge der Ventilkörperbewegung, insbesondere zur Synchronisation der Bewegungen, genutzt werden.

5. Vorrichtung zum Auftragen von Fluid, insbesondere Heißschmelzklebstoff, auf ein relativ zu der Vorrichtung bewegbares Substrat, mit
- einem mit einer Fluidquelle verbindbaren Zuführkanal zum Zuführen von Fluid,
- einer mittels des Zuführkanals mit Fluid speisbaren Düsenanordnung mit einer Austrittsöffnung zum Abgeben des Fluids und mit
- einer Ventilanordnung zum wahlweisen Unterbrechen des Fluidflusses, welche einen relativ zu einem Ventilsitz bewegbaren Ventilkörper aufweist, der zwischen einer den Fluidfluss unterbrechenden und einer den Fluidfluss freigebenden Stellung hin- und herbewegbar ist,
**gekennzeichnet durch** Sensormittel, die mindestens eine Stellung des Ventilkörpers relativ zu dem Ventilsitz erfassen
- **gekennzeichnet durch** eine Steuerungs- und Regeleinheit, die ein von den Sensormitteln in Abhängigkeit der Stellung des Ventilkörpers erzeugtes Signal empfangen kann und ein Steuerungs- und Regelsignal erzeugen kann, welches die Bewegung des Ventilkörpers steuert.

6. Vorrichtung nach Anspruch 5,
**dadurch gekennzeichnet, dass** die Sensormittel an einem den Ventilkörper umgebenden Grundkörper angeordnet sind.

7. Vorrichtung nach Anspruch 5 oder 6,
**dadurch gekennzeichnet, dass** die Sensormittel an dem dem Ventilsitz gegenüberliegenden Ende des Ventilkörpers angeordnet sind.

8. Vorrichtung nach einem der Ansprüche 5-7,
**dadurch gekennzeichnet, dass** die Sensormittel eine Strahlungsquelle und einen Strahlungsempfänger umfassen, die Strahlungsquelle eine Strahlung auf einen Abschnitt des Ventilkörpers richtet und der Strahlungsempfänger die von diesen Ventilkörperabschnitt reflektierte Strahlung empfängt.

9. Vorrichtung nach einem der Ansprüche 5-8,
**dadurch gekennzeichnet, dass** die Sensormittel einen Lichtwellenleiter umfassen, der Licht von einem Sender zu dem Ventilkörper und vom Ventilkörper reflektiertes Licht zu einem Empfänger leitet.

10. Vorrichtung nach Anspruch 9,
**dadurch gekennzeichnet, dass** die Licht-Strahlung eine Wellenlänge im Infrarotbereich hat.

11. Vorrichtung nach einem der Ansprüche 8-10,
**dadurch gekennzeichnet, dass** im reflektierenden Abschnitt des Ventilkörpers Bereiche mit unterschiedlicher Reflektionskraft insbesondere mindestens eine Vertiefung, ausgebildet sind.

12. Vorrichtung nach einem Ansprüche 8-11,
**dadurch gekennzeichnet, dass** auf dem Ventilkörper im Bereich des reflektierenden Abschnitts mindestens eine Farbmarkierung vorhanden ist, welche andere reflektierende Eigenschaften hinsichtlich der für die optischen Sensormittel relevanten Strahlung aufweist, als der umgebenden Bereich um die Farbmarkierung des Ventilkörpers.

13. Vorrichtung nach einem der Ansprüche 5-12,
**dadurch gekennzeichnet, dass** mehrere Ventilkörper vorhanden sind, die jeweils mit Sensormitteln und/oder einer Steuerungs- und Regeleinheit zusammenwirken.

## Claims

1. A method of applying fluids to substrates, in which the flow of fluid is interrupted and released by means of the movement of a valve member relative to a valve-member seat, wherein
at least one setting of the valve member relative to the valve-member seat is detected by sensor means, in particular optical sensor means,
**characterized in that**
- the sensor means produce a sensor signal in a manner dependent upon the setting of the valve member with respect to the valve-member seat,
- the signal is fed into a control and regulating unit, and
- the control and regulating unit produces a control signal which controls the movement of the valve member relative to the valve-member seat.

2. A method according to Claim 1, **characterized in that** the speed, the acceleration and/or the clock frequency of the movement of the valve member are determined from the control signals.

3. A method according to Claim 1 or 2, **characterized in that** a nominal-value curve or a time-resolved nominal-value curve is provided to the control and regulating unit from a programmable unit, and the control and regulating unit produces the control signal with reference to the said nominal value and an actual value determined from the sensor signal.

4. A method according to any one of the preceding Claims, **characterized in that** the sensor signal of the sensor means is used by at least two valve members in order to control the sequence of the movement of the valve member with respect to time, and in particular in order to synchronize the movements.

5. An apparatus for applying fluid, in particular hot-melt adhesive, to a substrate movable relative to the apparatus, with
- a supply duct capable of being connected to a fluid source in order to supply fluid,
- a nozzle arrangement capable of being fed with fluid by means of the supply duct and having an outlet opening for the discharge of the fluid, and with
- a valve arrangement for interrupting the flow of fluid in a selective manner, which valve arrangement has a valve member which is movable relative to a valve seat and which is movable in a reciprocating manner between a setting: interrupting the flow of fluid and a setting releasing the flow of fluid,
**characterized by** sensor means which detect at least one setting of the valve member relative to the valve seat.
- **characterized by** a control and regulating unit which can receive a signal, which is produced by the sensor means in a manner dependent upon the setting of the valve member, and can produce a control and regulating signal which controls the movement of the valve member.

6. An apparatus according to Claim 5, **characterized in that** the sensor means are arranged on a base member surrounding the valve member.

7. An apparatus according to Claim 5 or 6, **characterized in that** the sensor means are arranged on the end of the valve member opposite the valve seat.

8. An apparatus according to any one of Claims 5 to 7, **characterized in that** the sensor means comprise a radiation source and a radiation receiver, the radiation source directs radiation onto a portion of the valve member, and the radiation receiver receives the radiation reflected by the said valve-member portion.

9. An apparatus according to any one of Claims 5 to 8, **characterized in that** the sensor means comprise an optical fibre which conveys light from a transmitter to the valve member and light reflected from the valve member to a receiver.

10. An apparatus according to Claim 9, **characterized in that** the light radiation has a wavelength in the infrared range.

11. An apparatus according to any one of Claims 8 to 10, **characterized in that** regions with differing reflective force, and in particular at least one depression, are formed in the reflecting portion of the valve member.

12. An apparatus according to any one of Claims 8 to 11, **characterized in that** at least one colour marking, which has reflective properties - with respect to the radiation relevant to the optical sensor means - which are different from the surrounding region around the colour marking of the valve member, is present on the valve member in the region of the reflecting portion.

13. An apparatus according to any one of Claims 5 to 12, **characterized in that** a plurality of valve members are provided, which co-operate in each case with sensor means and/or a control and regulating unit.

## Revendications

1. Procédé d'application de fluides sur des substrats, dans lequel l'écoulement de fluide est interrompu et libéré par le déplacement d'un corps de soupape par rapport à un siège de corps de soupape,
au moins une position du corps de soupape par rapport au siège de corps de soupape étant détectée par des moyens formant capteur, en particulier des moyens formant capteur optique,
**caractérisé en ce que**
- les moyens formant capteur produisent un signal de capteur en fonction de la position du corps de soupape par rapport au siège de corps de soupape,
- le signal est dirigé dans une unité de commande et de régulation et
- l'unité de commande et de régulation produit un signal de commande, lequel commande le déplacement du corps de soupape par rapport au siège de corps de soupape.

2. Procédé selon la revendication 1,
**caractérisé en ce que** la vitesse, l'accélération et/ou la fréquence cyclique du déplacement du corps de soupape sont déterminées à partir des signaux de capteur.

3. Procédé selon la revendication 1 ou 2,
**caractérisé en ce qu'**une courbe de valeur théorique ou une courbe de valeur théorique à résolution temporelle est mise à disposition de l'unité de commande et de régulation à partir d'une unité programmable et l'unité de commande et de régulation produit le signal de commande en s'appuyant sur cette valeur théorique et une valeur effective déterminée à partir du signal de capteur.

4. Procédé selon l'une quelconque des revendications précédentes,
**caractérisé en ce que** le signal de capteur des moyens formant capteur d'au moins deux corps de soupape est utilisé pour commander la suite dans le temps de déplacements du corps de soupape, en particulier pour synchroniser les déplacements.

5. Dispositif d'application de fluide, en particulier d'adhésif fusible à la chaleur, sur un substrat mobile par rapport au dispositif, comprenant
- un canal d'alimentation pouvant être relié à une source de fluide destiné à amener le fluide,
- un agencement de buses pouvant être alimenté en fluide au moyen du canal d'alimentation comprenant une ouverture de sortie destinée à distribuer le fluide et comprenant
- un agencement de soupapes destiné à interrompre au choix l'écoulement de fluide, lequel agencement comprend un corps de soupape mobile par rapport à un siège de soupape, lequel corps est déplacable selon un mouvement de va-et-vient entre une position interrompant l'écoulement de fluide et une position libérant l'écoulement de fluide,
**caractérisé par** des moyens formant capteur, qui détectent au moins une position du corps de soupape par rapport au siège de soupape,
- **caractérisé par** une unité de commande et de régulation, qui peut recevoir un signal produit par les moyens formant capteur en fonction de la position du corps de soupape et peut produire un signal de commande et de régulation, lequel commande le déplacement du corps de soupape.

6. Dispositif selon la revendication 5,
**caractérisé en ce que** les moyens formant capteur sont disposés sur un corps de base entourant le corps de soupape.

7. Dispositif selon la revendication 5 ou 6,
**caractérisé en ce que** les moyens formant capteur sont disposés sur l'extrémité du corps de soupape opposée au siège de soupape.

8. Dispositif selon l'une quelconque des revendications 5 à 7,
**caractérisé en ce que** les moyens formant capteur comportent une source de rayonnement et un récepteur de rayonnement, la source de rayonnement oriente un rayonnement vers une section du corps de soupape et le récepteur de rayonnement reçoit le rayonnement réfléchi par cette section de corps de soupape.

9. Dispositif selon l'une quelconque des revendications 5 à 8,
**caractérisé en ce que** les moyens formant capteur comportent un guide d'ondes optiques, qui guide la lumière d'un émetteur au corps de soupape et la lumière réfléchie par le corps de soupape à un récepteur.

10. Dispositif selon la revendication 9,
**caractérisé en ce que** le rayonnement lumineux présente une longueur d'onde dans le domaine des infrarouges.

11. Dispositif selon l'une quelconque des revendications 8 à 10,
**caractérisé en ce que** dans la section réfléchissante du corps de soupape se forment des zones avec une force de réflexion différente, en particulier au moins une cavité.

12. Dispositif selon l'une quelconque des revendications 8 à 11,
**caractérisé en ce qu'**au moins un marquage en couleur est présent sur le corps de soupape dans la zone de la section réfléchissante, lequel marquage comprend des propriétés réfléchissantes autres en ce qui concerne le rayonnement essentiel aux moyens formant capteur optique, que celles de la zone environnante autour du marquage en couleur du corps de soupape.

13. Dispositif selon l'une quelconque des revendications 5 à 12,
**caractérisé en ce que** plusieurs corps de soupape sont présents, qui coopèrent respectivement avec des moyens formant capteur et/ou une unité de commande et de régulation.
